Europäisches Patentamt

European Patent Office

Office européen des brevets

(11) Veröffentlichungsnummer: **0 320 674**
**A2**

(12) **EUROPÄISCHE PATENTANMELDUNG**

(21) Anmeldenummer: 88119569.7

(22) Anmeldetag: 24.11.88

(51) Int. Cl.4: **E06B 3/54 , E04B 2/96 , E06B 3/66**

(30) Priorität: 15.12.87 CH 4889/87

(43) Veröffentlichungstag der Anmeldung:
21.06.89 Patentblatt 89/25

(84) Benannte Vertragsstaaten:
. AT BE CH DE ES FR GB GR IT LI LU NL SE

(71) Anmelder: **Metallbau Koller AG**
**Güterbahnhofplatz 8**
**CH-4132 Muttenz(CH)**

(72) Erfinder: **Weiss, Günther, Dipl.-Phys.**
**Bromenackerweg 41**
**D-7858 Weil am Rhein(DE)**

(74) Vertreter: **Ernicke, Hans-Dieter, Dipl.-Ing. et al**
**Schwibbogenplatz 2b**
**D-8900 Augsburg(DE)**

(54) **Platte mit zwei gläsernen Tafeln und Halte- und/oder Sicherungsorganen und Verwendung der Platte.**

(57) Die Platte (1) besitzt zwei aus Glas bestehende Tafeln (3,5), deren einander zugewandten Flächen (3b,5a) überall durch eine durchsichtige Klebstoff-Schicht (7) miteinander und/oder mit zwischen sie hineinragenden, ersten Randabschnitten (13a) von Halte- und/oder Sicherungsorgane (11) verklebt sind. Diese bestehen zumindest im wesentlichen aus einem flexiblen Lappen (13), der beispielsweise aus einem Draht-Gewebe oder -Geflecht gebildet ist. Die Platte (1) wird zur Bildung einer Plattenkonstruktion für eine Fassade und/oder ein Dach entlang von ihren Rändern (9) an Haltestäben (23) festgeklebt, an denen auch die der Platte (1) abgewandten, zweiten Randabschnitte (13b) der Lappen (13) befestigt werden, so daß die Lappen (13) die Platte (1) bei einem Versagen der sie mit den Haltestäben (23) verbindenden Klebverbindungen (25) gegen eine vollständige Trennung von den Haltestäben (23) sichern, wobei insbesondere auch die äußere Tafel (3) noch gehalten wird.

FIG. 2

## Platte mit zwei gläsernen Tafeln und Halte- und/oder Sicherungsorganen und Verwendung der Platte

Die Erfindung betrifft eine Platte mit Halte- und/oder Sicherungsorganen gemäß dem Oberbegriff des Anspruchs 1. Die Platte kann beim Verglasen einer Tragkonstruktion zur Bildung einer Plattenkonstruktion für eine Fassade und/oder ein Dach eines Gebäudes ohne auf der Außenseite der Platte angreifende Profilstäbe an der Tragkonstruktion befestigt werden.

Solche aus der GB-A 2 179 391 bekannte Platten besitzen je zwei aus Glas bestehende Tafeln, deren einander zugewandte Seiten in der der Nähe ihrer Ränder durch Randverbindungen derart miteinander verklebt sind, daß sich zwischen den mittleren, von den Randverbindungen umfaßten Hauptabschnitten der einander zugewandten Tafelseiten ein freier Hohlraum ergibt, so daß jedes Tafelpaar also eine Isolierglas-Platte bildet. Zum Befestigen einer Isolierglas-Platte sind formfeste Halteorgane, nämlich Profilstäbe mit einem U-förmigen Profilabschnitt vorhanden, der einen Randbereich der inneren Tafel umgreift und diesen Randbereich über einen Dichtungsstreifen aus synthetischem Gummi hält. Der zwischen die beiden Tafeln hineinragende Schenkel des U-förmigen Profilabschnitts ist zudem über eine Silikondichtung mit der äußeren Tafel verbunden.

Bei diesen bekannten Isolierglas-Platten ist also die äußere Tafel lediglich bei verhältnismäßig schmalen, streifenförmigen Randbereichen ihrer inneren Seite mit der inneren Tafel und den aus formfesten Profilstäben bestehenden Halteorganen verbunden. Wenn bei einer aus solchen Isolierglas-Platten gebildeten, zum Beispiel als Fassade eines Gebäudes dienenden Plattenkonstruktion die verklebten Randverbindungen einer Isolierglas-Platte versagen, zum Beispiel brechen und/oder reißen und/oder verbrennen, kann sich die ganze äußere Tafel der betreffenden Platte von der Fassade lösen und herunterfallen. Ferner besteht bei einem Glasbruch eine große Gefahr, daß Bruchstücke und/oder die ganze äußere Tafel herunterfallen bzw. herunterfällt.

Der Erfindung liegt daher die Aufgabe zugrunde, eine Nachteile der bekannten Platten behebende Platte mit Halte-und/oder Sicherungsorganen zu schaffen, wobei insbesondere verhindert werden soll, daß sich bei einer unter Verwendung der Platte gebildeten Plattenkonstruktion beim Versagen von die Platte mit einer Tragkonstruktion verbindenden Klebverbindungen die äußere - bzw. bei einer Platte mit mehr als zwei Tafeln - die äußerste Tafel vollständig von der Tragkonstruktion trennen kann. Zudem soll bei einem Glasbruch die Gefahr des Herunterfallens von Bruchstücken von der Plattenkonstruktion ausgeschaltet oder zumindest stark vermindert werden.

Diese Aufgabe wird erfindungsgemäß durch eine Platte mit Halte- und/oder Sicherungsorganen gemäß dem Anspruch 1 gelöst. Vorteilhafte Ausgestaltungen der Platte gehen aus den vom Anspruch 1 abhängigen Ansprüchen hervor.

Die Erfindung betrifft ferner eine Verbindung einer Platte mit Halte- und/oder Sicherungsorganen zur Bildung einer Plattenkonstruktion für eine Fassade und/oder ein Dach, wobei die Verbindung erfindungsgemäß in der durch den Anspruch 7 definierten Weise erfolgt. Bevorzugte Ausgestaltungen der Verbindung ergeben sich aus den von diesem Anspruch abhängigen Ansprüchen.

Die Platte besitzt zwei aus normalerweise mineralischem Glas bestehende Tafeln, zwischen welche bei Randbereichen erste Randabschnitte der Halte- und/oder Sicherungsorgane hineinragen. Die einander zugewandten Seiten der zwei Tafeln, zwischen deren Randbereiche die Halte- und/oder Sicherungsorgane hineinragen, haben vorzugsweise die gleichen Umrißabmessungen, so daß die beiden Tafeln einander vorzugsweise vollständig überdecken. Möglicherweise könnte jedoch die eine Tafel, beispielsweise die äußere Tafel, bei zwei oder allen Rändern eine wenig über die andere Tafel hinausragen. Die eine der beiden Tafeln ist auf ihrer der anderen Tafel zugewandten Seite über ihre ganze Fläche oder, falls die beiden Tafeln ein wenig voneinander abweichende Umrißabmessungen haben, mindestens über diejenige Fläche, die von der anderen Tafel überdeckt ist, mit dieser und/oder mit den sich zwischen den Tafeln befindenden ersten Randabschnitten der Halte-und/oder Sicherungsorgane verklebt. Die einander zugewandten Tafelseiten sind also zumindest im wesentlichen überall und vorzugsweise überhaupt überall miteinander verklebt, so daß die beiden Tafeln, zwischen welche die Halte- und/oder Sicherungsorgane hineinragen, zusammen eine Verbundsicherheitsglas-Platte bilden. Die beiden Tafeln können gleiche oder verschiedene Dicken haben, die abhängig von der Plattengröße typischerweise etwa 4 bis 6 mm betragen, aber auch größer oder kleiner und insbesondere kleiner als 4 mm und sogar kleiner als 3 mm sein können. Die die beiden Tafeln verbindende Klebstoff-Schicht kann in ihrem nicht von den ersten Randabschnitten der Halte-und/oder Sicherungsorgane eingenommenen Bereich und also insbesondere zwischen den mittleren Bereichen der beiden Tafeln vorzugsweise eine mindestens 0,5 mm sowie höchstens 1 mm und beispielsweise 0,7 bis 0,8 mm betragende Dicke aufweisen. Die Dicke des zwischen die Tafeln hineinragenden, ersten Randabschnitts jedes Halte- und/oder Sicherungsorgans soll höchstens gleich der Dicke der im mittleren Bereich der Tafeln vorhandenen Klebstoff-Schicht und vorzugsweise kleiner als diese Dicke sein und beispielsweise höchstens 50 % von dieser betragen. Der zwischen die verklebten Tafeln hineinragende Randabschnitt eines Halte- und/oder Sicherungsorgans kann etwa eine vorzugsweise höchstens 0,4 mm und beispielsweise 0,2 bis 0,3 mm betragende Dicke haben. Wenn eine Platte, wie es normalerweise zumindest für einen Teil der Platten einer Plattenkonstruktion der Fall ist, wenigstens in der Blickrichtung vom Innenraum eines Gebäudes zu dessen Außenseite hin durchsichtig sein soll, muß selbstverständlich auch der Klebstoff durchsichtig sein, der die beiden Tafeln miteinander verbindet. Im übrigen besitzt die Klebstoff-Schicht vorzugsweise eine hohe Elastizität.

Die Platte kann zusätzlich zu den beiden Tafeln, zwischen welche die Halte- und/oder Sicherungsorgane hineinragen, noch mindestens eine andere Tafel aufweisen. Diese kann mit der sich näher bei ihr befindenden Tafel des eine Verbundsicherheitsglas-Platte bildenden Tafelpaars lediglich mittels entlang von ihren Rändern verlaufenden, normalerweise eine formfeste Leiste aufweisenden Randverbindungen verbunden sein, so daß sich zwischen den mittleren Hauptteilen des das eine Verbundsicherheitsglas-Platte bildenden Tafelpaares und der zusätzlichen Tafel ein freier Hohlraum ergibt und die drei Tafeln zusammen auch eine Isolierglas-Platte bilden. Die zusätzlich zum eine Verbundsicherheitsglas-Platte bildenden Tafelpaar vorhandene und von diesen im mittleren Hauptteil durch einen freien Zwischenraum getrennte Tafel soll sich bei einem Gebäude auf der inneren Seite des besagten Tafelpaares befinden. Das die Verbundsicherheitsglas-Platte bildende Tafelpaar kann mit den Rändern der zusätzlichen Tafel bündige Ränder haben oder bei mindestens zwei Rändern oder bei allen vier Rändern der zusätzlichen Tafel ein wenig über diese hinausragen.

Es wäre zudem möglich, drei oder noch mehr Tafeln paarweise zumindest im wesentlichen über ihre ganzen einander zugewandten Flächen miteinander zu einer Verbundsicherheitsglas-Platte zu verkleben. Bei einer solchen mehr als zwei Tafeln aufweisenden Verbundsicherheitsglas-Platte könnten die Halte- und/oder Sicherungsorgane beispielsweise zwischen der äußersten und der zweitäußersten Tafel befestigt sein.

Die Platte ist meistens viereckig, d.h. rechteckig oder quadratisch und normalerweise mindestens bei zwei einander abgewandten Rändern oder bei allen Rändern mit zwischen ihre Tafeln hineinragenden und mit diesen verklebten Halte-und/oder Sicherungsorganen versehen. Dabei können bei einem Plattenrand zwei oder mehr über dessen Länge verteilte und beispielsweise durch Zwischenräume von einander getrennte Halte- und/oder Sicherungsorgane vorhanden sein. Stattdessen kann jedoch bei einem Plattenrand nur ein einziges Halte-und/oder Sicherungsorgan vorhanden sein, das sich dann vorteilhafterweise über einen verhältnismäßig großen Teil der Länge des betreffenden Plattenrands, etwa mindestens über die halbe oder sogar mindestens im wesentlichen über die ganze Länge des betreffenden Plattenrands erstreckt.

Jedes Halte- und/oder Sicherungsorgan weist einen flexiblen Lappen auf und besteht vorzugsweise zumindest im wesentlichen, nämlich abgesehen von allenfalls bei seinem bei der Verwendung der Platte mit der Tragkonstruktion verbundenen, zweiten Endabschnitt vorhandenen Verstärkungsmitteln, ausschließlich aus einem flexiblen Lappen. Ein Lappen kann zum Beispiel aus einem in Bezug auf seine Herstellung textilartigen Gebilde in der Form eines Gewebes, Geflechts und/oder Gewirkes gebildet sein und also mindestens eine Faser aufweisen, deren Abschnitte mit anderen Abschnitten von ihr selbst und/oder mit anderen Fasern verhängt und/oder vermascht sind. Dabei können entweder einzelne Fasern oder Bündel von miteinander verseilten oder verzwirnten Fasern verwoben oder verflochten oder zu einem Gewirke verarbeitet sein. Ein flexibler Lappen könnte jedoch anstelle eines aus mindestens einer Faser hergestellten, textilartigen Gebildes eine kompakte, ein- oder mehrschichtige Folie aufweisen. Des weiteren könnte ein mehrschichtiger Lappen vorgesehen werden, der zum Beispiel mindestens eine textilartige Schicht und/oder mindestens eine folienartige Schicht aufweist.

Die Halte- und/oder Sicherungsorgane und also auch die diese mindestens zum Teil bildenden Lappen bestehen vorzugsweise mindestens zum Teil oder noch besser vollständig aus einem feuerfesten, nicht oder nur schwer brennbaren und bei normalen Brandtemperaturen nicht schmelzenden Material. Wenn der Lappen mindestens zum Teil aus einem Gewebe, Geflecht oder Gewirke besteht, können dessen Fasern beispielsweise aus einem metallischen Material, etwa einem chromhaltigen Stahl und/oder aus mineralischem Glas bestehen. Die einzelnen Fasern können des weiteren aus einem Verbundmaterial bestehen und beispielsweise eine aus metallischem Material oder mineralischem Glas bestehende Seele und einen diese umschließenden Mantel aus Kunststoff aufweisen. Des weiteren könnte auch ein aus metallischen oder gläsernen Fasern hergestelltes Gewebe, Geflecht oder Gewirke als Ganzes mit einer Beschichtung aus Kunststoff oder einem sonstigen Material versehen sein. Falls der Lappen ganz oder teilweise aus einer kompakten Folie gebildet ist, kann diese zum Beispiel aus Metall oder aus mit Kunststoff beschichtetem Metall bestehen. Das Gewebe, Geflecht oder Gewirke oder die Folie könnten eventuell auch ausschließlich aus Kunststoff bestehen, der dann vorzugsweise ebenfalls mindestens einigermaßen feuerfest sein sollte.

Die erfindungsgemäßen Platten können zur Bildung einer Plattenkonstruktion für eine Fassade und/oder ein Dach eines Gebäudes an einer Tragkonstruktion befestigt werden. Zur Klarstellung sei bemerkt, daß unter der äußeren Begrenzungsfläche einer zwei oder mehr Tafeln aufweisenden Platte im folgenden diejenige dem Gebäude-Innenraum abgewandten Platten-Begrenzungsfläche verstanden wird, die am weitesten vom Innenraum entfernt ist. Die von den äußeren Flächen der Gesamtheit der Platten einer Plattenkonstruktion aufgespannte Grenzfläche kann dann zumindest im wesentlichen, nämlich beispielsweise abgesehen von allenfalls zur Abdichtung von Fugen zwischen benachbarten Platten vorhandenen, und möglicherweise ein wenig über die äußeren Platten-Begrenzungsflächen hinausragenden Dichtungsmitteln, wie gummielastische Dichtungsstreifen oder Dichtungsmassen, die Hüllfläche der Plattenkonstruktion bilden. Wenn eine Plattenkonstruktion eine Fassade eines Gebäudes oder mindestens einen Teil einer solchen bildet, können die äußeren Flächen der Platten zum Beispiel eine vertikale sowie ebene oder eine vertikale, aber im Grundriß mindestens stellenweise gebogene, entlang einer glatten, stetigen Kurve verlaufenden Grenzfläche aufspannen. Wenn die Platten hingegen zur Bildung von mindestens einem Teil eines Dachesdienen, können sie geneigt oder horizontal verlaufen und eben oder möglicherweise gebogen sein. Wenn die Platten vertikal oder geneigt angeordnet sind, ist es vorteilhaft, wenn zumindest bei ihren von unten nach oben verlaufenden, d.h. vertikalen oder geneigten Rändern Halte- und/oder Sicherungsorgane angeordnet sind.

Die Platten sind normalerweise bei jedem Rand der inneren bzw. innersten Tafel zumindest im wesentlichen entlang der ganzen Längen des betreffenden Tafelrandes mit einem gummi-elastischen Klebstoff an einen formfesten Haltestab der Tragkonstruktion angeklebt. Falls eine Platte mindestens eine Tafel besitzt, die zumindest bei einem Teil der Plattenränder über die innerste Tafel hinausragt, können die bei den betreffenden Plattenrändern vorhandenen Haltestäbe zusätzlich auch noch mit einem Randbereich der inneren Fläche der bzw. einer der über die innerste Tafel hinausragenden Tafel verklebt sein. Die Platten sind dabei beispielsweise ausschließlich bei Randbereichen von inneren, d.h. dem Gebäude-Innenraum zugewandten Flächen ihrer Tafeln mit Haltestäben verklebt, könnten aber möglicherweise auch noch bei den die Schmal- oder Stirnseiten der Tafeln bildenden Flächen von diesen mit den Haltestäben verklebt sein. Die an einer Platte angeklebten Haltestäbe können ausschließlich mit der betreffenden Platte verklebt sein und einen dieser zugeordneten Rahmen bilden. Es besteht jedoch auch die Möglichkeit, daß mindestens einige Haltestäbe oder sogar alle Haltestäbe mit Ausnahme gewisser bei den Rändern der Plattenkonstruktion angeordneter Haltestäbe je mit zwei oder mehr Platten verklebt sind. Bei einer Fassade können zum Beispiel vertikale Haltestäbe vorgesehen sein, die mit einer ganzen Reihe von sich vertikal übereinander befindenden Platten und eventuell auch mit zwei sich jeweils in gleicher Höhe nebeneinander befindenden Platten verklebt sind. Die horizontalen Haltestäbe könnten in diesem Fall je nur mit einer einzigen Platte oder, abgesehen von den untersten und obersten Haltestäben der Plattenkonstruktion, je mit zwei sich übereinander befindenden Platten verklebt sein. Im übrigen können die mit den Platten verklebten Haltestäbe lösbar oder unlösbar und starr oder möglicherweise rechtwinkelig zu ihrer Längsrichtung und parallel zur Plattenebene begrenzt bewegbar mit anderen Stäben und/oder sonstigen Teilen der normalerweise gerüstartigen Tragkonstrukion verbunden sein. Vorteilhafterweise ist jedes an einer Platte befestigte Halte- und/oder Sicherungsorgan lösbar oder eventuell unlösbar am gleichen Haltestab befestigt, an dem die Platte beim betreffenden Rand angeklebt ist, könnte aber möglicherweise auch an einem anderen zum betreffenden Plattenrand parallelen Stab oder sonstigen Teil der Tragkonstruktion befestigt sein.

Die Lappen sollen nach ihrer Befestigung an der Tragkonstruktion vorteilhafterweise höchstens unter geringer Spannung stehen, aber doch annähernd straff sein, so daß sich eine Platte im Fall, daß ihre Klebverbindungen mit Haltestäben oder anderen formfesten Teilen der Tragkonstruktion versagen, bezüglich der Tragkonstruktion höchstens wenig bewegen kann. Im übrigen müssen die Lappen selbstverständlich ausreichend zugfest sein, um die Platte, an der sie befestigt sind, beim allfälligen Versagen der genannten Klebverbindungen auch tatsächlich an der Tragkonstruktion festhalten zu können.

Zudem ist es günstig, wenn die flexiblen Lappen zumindest in der von ihrem an der Platte befestigten, ersten Randabschnitt zu ihrem an der Tragkonstruktion befestigten, zweiten Randabschnitt verlaufenden Richtung, in der die bei einem Versagen der Klebverbindungen auf Zug beansprucht werden, nur verhältnismäßig wenig elastisch und/oder durch Reckung des sie bildenden Gewebes, Geflechts oder Gewirkes dehnbar sind.

Die Erfindung wird nun anhand in der Zeichnung dargestellter Ausführungsbeispiele näher erläutert. In der Zeichnung zeigt.

Fig. 1 einen schematisierten Schnitt durch die Randbereiche von zwei benachbarten Verbundsicherheitsglas-Platten und die diese haltende Tragkonstruktion einer Plattenkonstruktion,

Fig. 2 einen Ausschnitt aus der Fig. 1 in größerem Maßstab,

Fig. 3 einen schematisierten Schnitt durch einen Bereich einer Platte und der Tragkonstruktion einer anderen Plattenkonstruktion und

Fig. 4 einen schematisierten Schnitt durch einen anderen Haltestab und ein von diesem gehaltenes Halte- und/oder Sicherungsorgan.

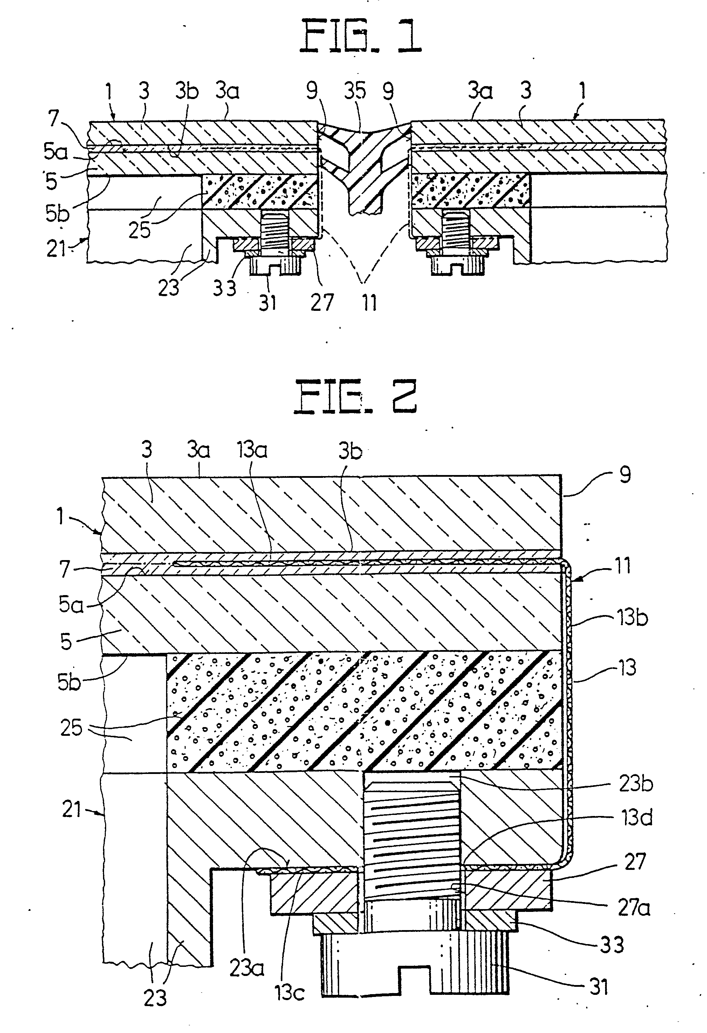

Beim in der Figur 1 gezeichneten Schnitt kann es sich beispielsweise um einen Horizontalschnitt durch eine zur Bildung einer vertikalen Fassade eines Gebäudes dienende Plattenkonstruktion handeln. Die Plattenkonstruktion weist Platten (1), nämlich Verbundsicherheitsglas-Platten, auf. Jede Platte (1) besitzt eine äußere, dem Gebäude-Innenraum abgewandte Tafel (3) und eine innere Tafel. Die beiden Tafeln (3,5) bestehen aus mineralischem Glas, sind eben und viereckig und haben in einem zur Plattenebene parallelen Riß die gleichen Abmessungen und beispielsweise auch die gleichen Dicken. Die äußeren Flächen (3a) der Tafeln (3) bilden die den Gebäude-Innenraum abgewandten Begrenzungsflächen der ganzen Platten (1) und spannen zusammen die äußere, vertikale, ebene Grenz- und/oder Hüllfäche der Plattenkonstruktion auf.

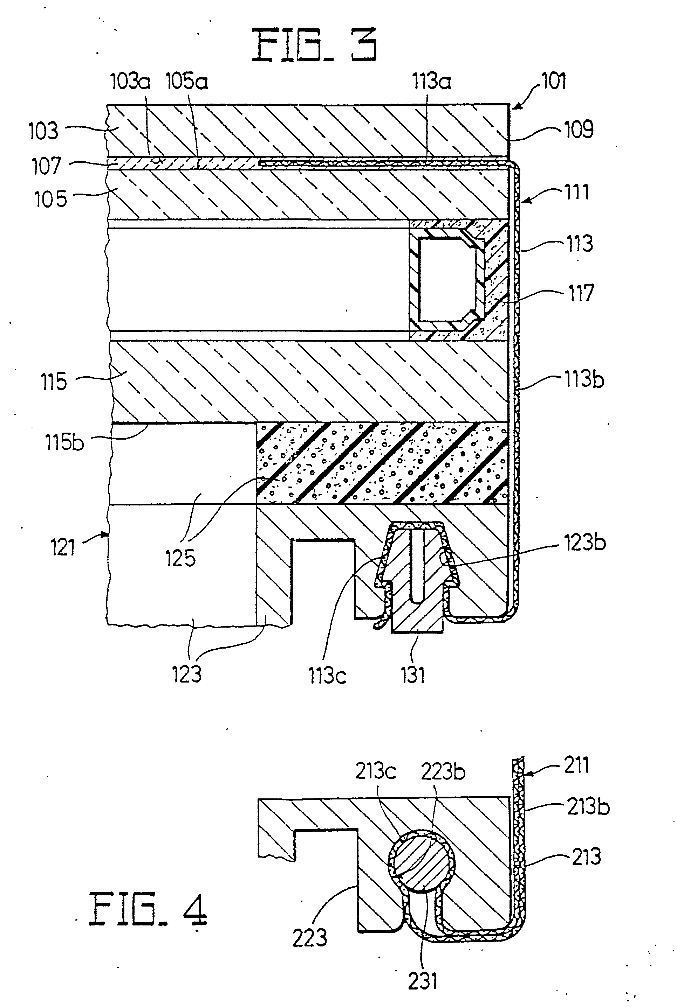

Wie man besonders deutlich aus der Figur 2 ersehen kann, ist die Tafel (3) auf ihrer der Tafel (5) zugewandten Seite über ihre ganze innere Fläche (3b) mittels einer Klebstoff-Schicht (7) mit der ganzen äußeren Fläche (5a) der inneren Tafel (5) verklebt. Die Klebstoff-Schicht (7) ist durchsichtig und besteht aus einem Kunststoff, nämlich Polyvinylbutyral. Jede Platte (1) ist mindestens bei ihren beiden vertikalen Rändern (9) mit mindestens einem Halte-und/oder Sicherungsorgan (11) und beispielsweise mit mehreren über die Längen des betreffenden Randes (9) verteilten und durch Zwischenräume von einander getrennten Halte- und/oder Sicherungsorganen (11) versehen. Jedes Halte- und/oder Sicherungsorgan (11) besitzt als Hauptbestandteil einen flexiblen Lappen (13) und besteht beispielsweise ausschließlich aus einem solchen. Der Lappen (13) ist aus einem Gewebe oder Geflecht mit Fasern aus Chromstahl-Drähten gebildet, die eventuell noch mit einem Kunststoff-Mantel beschichtet sein können. Jeder Lappen (13) besitzt einen ersten, zwischen Randbereiche der beiden Tafeln (3,5) hineinragenden sowie durch die Klebstoff-Schicht (7) mit diesen verklebten Randabschnitt (13a), einen mittleren Abschnitt (13b) und einen zweiten Randabschnitt (13c). Der letzte besitzt mindestens ein Loch (13d) und beispielsweise, abhängig von seiner entlang dem betreffenden Plattenrand gemessenen Ausdehnung, zwei oder mehr, entlang diesem Plattenrand voneinander beabstandete Löcher (13d). Der bzw. jeder ein Loch (13d) begrenzende Bereich des Randabschnitts (13c) oder der ganze zweite Randabschnitt (13c) kann eventuell durch nicht gezeichnete Verstärkungsmittel verstärkt sein, die etwa für das bzw. jedes Loch eine dieses begrenzende Öse und/oder einen den ganzen Randabschnitt (13c) umfassenden Blechmantel aufweisen. Falls solche Verstärkungsmittel vorhanden sind, ist der vom zweiten Lappen-Randabschnitt und ihnen gebildete Randabschnitt des Halte- und/oder Sicherungsorgans (11) dann unter Umständen nicht mehr flexibel.

Eine Tragkonstruktion (21) weist entlang den Rändern (9) der Platten (1) verlaufende, formfeste Haltestäbe (23), nämlich metallische Profilstäbe auf, die durch eine Klebverbindung (25) mit einem Streifen aus gummielastischem Silikon-Klebstoff dicht mit einem entlang dem betreffenden Plattenrand verlaufenden, streifenförmigen Randbereich der inneren Fläche (5b) der Tafel (5) verklebt sind. Jeder Haltestab (23) besitzt auf seiner der Platte (1) abgewandten Seite eine Auflagefläche (23a), auf der der zweite Randabschnitt (13c) des Lappens (13) aufliegt. Der zweite Randabschnitt (13c) ist mit einem auf seiner dem Haltestab (17) abgewandten Seite aufliegenden Klemmelement (27) und einer ein Loch (27a) von diesem sowie das bzw. ein Loch (13d) durchdringenden, in ein Gewindeloch (23b) des Haltestabes (23) eingeschraubten und mit einem Sicherungsring (33) gesicherten Schraube (31) am Haltestab 17) festgeklemmt und also lösbar befestigt. Das Klemmelement (27) erstreckt sich beispielsweise über die ganze, entlang dem betreffenden Plattenrand (9) gemessene Ausdehnung des Lappens (13) oder, falls mehrere entlang dem Plattenrand verteilte Lappen vorhanden sind, eventuell sogar über alle diese Lappen. Das Klemmelement kann dementsprechend eine längliche Form und mehrere Löcher (27a) besitzen. Die zwischen benachbarten Platten (1) vorhandenen Fugen sind durch Dichtungsmittel abgedichtet, die etwa in irgendeiner nicht dargestellten Weise an der Tragkonstruktion und/oder den Platten selbst verankerte, gummielastische Dichtungsstreifen (35) aufweisen und zum Beispiel mehr oder weniger genau bündig mit den äußeren Flächen (3a) der äußeren Tafeln (3) sein können. Die entlang den vier Rändern einer Platte (1) verlaufenden Haltestäbe (23) sind beispielsweise ausschließlich mit der betreffenden Platte verklebt, so daß sie zusammen einen dieser zugeordneten Rahmen bilden. Im übrigen sind die Haltestäbe bei ihren in den Figuren 1 und 2 weggebrochenen, d.h. nicht mehr gezeichneten Abschnitten mit anderen Profilstäben der Tragkonstruktion verbunden.

Für die Herstellung einer Platte (1) wird auf die Flächen (3b und 5a) der beiden aus mineralischem Glas bestehenden Tafeln (3 bzw. 5) je eine zum Beispiel etwa 0,3 bis 0,4 mm dicke Klebstoff-Folie aus durchsichtigem Polyvinylbutyral aufgebracht. Danach werden die ersten Randabschnitte (13a) der beispielsweise etwa 0,2 bis 0,3 mm dicken Lappen (13) auf eine der mit einer Klebstoff-Folie versehenen Tafel aufgebracht und die mit je einer Klebstoff-Folie versehenen Tafeln (3,5) gegeneinander gepreßt und erwärmt. Bei diesem Vorgang entsteht aus den anfänglich durch eine strichpunktiert in der Figur 2 angedeutete Fläche begrenzten und getrennten Folien die zusammenhängende Klebstoff-Schicht (7), wobei der Klebstoff von beiden Seiten jedes ersten Lappen-Randabschnitts (13a) in dessen Löcher oder Poren eindringt und diese Löcher oder Poren durchdringende Klebstoff-Stege bildet. Die beiden Tafeln sind also auch in den von ersten Lappen-Randabschnitten (13a) eingenommenen Bereichen teils mittelbar über die Lappen und teils unmittelbar über die besagten Klebstoff-Stege miteinander verklebt. Statt auf beide zu verklebende Tafeln je eine Klebstoff-Folie aufzutragen, kann man insbesondere im Fall, daß das den Lappen bildende Gewebe oder Geflecht ausreichend große Löcher oder Poren hat, um für den Klebstoff gut durchlässig zu sein, auch nur auf eine der beiden Tafeln, und zwar vorzugsweise auf die äußere Tafel (3), eine Klebstoff-Folie aufbringen.

Wenn die zumindest im wesentlichen aus einem Lappen (13) bestehenden Halte- und/oder Sicherungsorgane (11) in der in den Figuren 1 und 2 ersichtlichen Weise zwischen Randbereichen der Tafeln (3,5) und an Haltestäben (23) befestigt sind, soll der mittlere Lappen-Abschnitt (13b) zumindest im wesentlichen spannungslos, aber trotzdem annähernd straff sein, wie es bereits in der Einleitung erörtert ist. Wenn die Platte (1) in der vorgesehenen Weise durch die Klebverbindungen (25) an der Tragkonstruktion (21) gehalten ist, üben die Halte- und/oder Sicherungsorgane (11) dann auf die Platte (1) keine Kraft aus, die möglicherweise störende Spannungen in den Tafeln (3,5) verursachen könnte. Falls bei einer Plattenkonstruktion die eine Platte (1) mit den Haltestäben (23) der Tragkonstruktion (21) verbindenden Klebverbindungen (25) versagen, etwa brechen und/oder reißen und/oder verbrennen sollten, wird die Platte noch durch die Halte- und/oder Sicherungsorgane (11) an der Tragkonstruktion (21) gehalten und gegen eine vollständige Trennung von dieser gesichert. Da die Platte (1) als Verbundsicherheitsglas-Platte ausgebildet ist, bilden ihre beiden Tafeln (3,5) und auch die mit diesen verklebten Halte- und/oder Sicherungsorgane eine praktisch untrennbare Einheit, so daß die Halte- und/oder Sicherungsorgane (11) bei einem Versagen der Klebverbindungen (25) insbesondere auch die äußere Tafel (3) zuverlässig sichern.

In der Figur 3 ist ein Randbereich einer Platte (101) mit zwei gläsernen Tafeln (103,105) ersichtlich, die durch eine durchsichtige Klebstoff-Schicht (107) miteinander sowie mit sich zwischen ihnen befindlichen, ersten Randabschnitten (113a) der flexiblen Lappen (113) von Halte- und/oder Sicherungsorganen (111) verklebt sind und also zusammen eine analog wie die Platte (1) ausgebildete Verbundsicherheitsglas-Platte bilden. Die Platte (101) unterscheidet sich von der Platte (1) indes dadurch, daß sie auf der dem Gebäude-Innenraum zugewandten Seite der Tafel (105) noch eine ebenfalls aus Glas bestehende Tafel (115) besitzt, die entlang von ihren Rändern durch Randverbindungen (117) mit je einer formfesten, hohlen Leiste sowie einer Klebstoff- und Dichtungsmasse mit streifenförmigen Bereichen der ihr zugewandten Fläche der Tafel (105) verbunden ist und zusammen mit den beiden Tafeln (103,105) eine Isolierglas-Platte bildet. Die Tragkonstruktion (121) besitzt entlang den Rändern (109) der Platte (101) verlaufende Haltestäbe (123), die durch den Klebverbindungen (25) entsprechende Klebverbindung (125) mit Randbereichen der inneren Fläche (115b) der Tafel (115) verklebt sind. Jeder Haltestab (123) besitzt eine im Querschnitt auf seiner der Platte (101) abgewandten Seite offene Nut (123b), die beispielsweise auf mindestens einer Seite und nämlich, wie gezeichnet, auf beiden Seiten eine Hinterschneidung besitzt. Der zweite Randabschnitt (113c) jedes Lappens (113) ist in der Nut (123b) mit einem in deren Hinterschneidungen eingreifenden Verankerungselement (131) befestigt. Dieses kann beispielsweise durch einen von seiner dem Nutgrund her eingeschnittenen Einschnitt getrennte, etwas federnde Zungen aufweisen und in die Nut eingerastet und/oder eingepreßt sein. Die Nut und das Verankerungselement können im übrigen derart ausgebildet sein, daß das letztere im Bedarfsfall mit einem Werkzeug zum Freigeben des zweiten Lappen-Randabschnitts (113c) wieder aus der Nut (123b) herausgenommen werden kann, ohne daß es selbst oder die Haltestäbe (23) oder Lappen (113) beschädigt werden.

In der Figur 4 ist ein Teil eines Halte- und/oder Sicherungsorgans (211) ersichtlich, dessen Lappen (213) zweilagig ist, und nämlich aus einer Schleife oder einem Schlauchstück besteht. Die beiden "offenen" Enden der Schleife bzw. ein Schlauchabschnitt bilden den nicht gezeichneten, zwischen zwei Tafeln einer ebenfalls nicht gezeichneten Verbundsicherheitsglas-Platte eingeklebten, ersten Randabschnitt des Lappens (213). Ein an der nicht gezeichneten Platte angeklebter Haltestab (223) besitzt eine Nut (223b). Diese besitzt im Querschnitt zwischen ihrer Mündung und ihrem Grund eine beispielsweise kreisförmige Erweiterung, die hinter dem Mündungsabschnitt eine Art von Hinterschneidungen bildet. Der zweite Randabschnitt (213c) des Lappens (213) bildet eine Schleife, die ein in der Nut (223b) angeordnetes Verankerungselement (231) umschließt. Dieses kann beispielsweise aus einer sich zumindest annähernd über die ganze Länge des Haltestabs (223) erstreckenden Stange bestehen und bei der Montage von einem Ende der Nut (223b) her in diese und in die vom zweiten Lappen-Randabschnitt (213c) gebildete, vorher in die Nut eingeführte Schleife eingeschoben werden, so daß es im montierten Zustand mit etwas Spiel oder mehr oder weniger fest in der Nut gehalten ist. Die Nut und das Verankerungselement könnten indes auch derart ausgebildet werden, daß das Verankerungselement durch die im Querschnitt vorhandene Mündung der Nut hindurch in diese eingesetzt werden kann.

## Ansprüche

1. Platte mit zwei gläsernen, miteinander verbundenen Tafeln (3,5,103,105) und zwischen Randbereiche von diesen hineinragenden Halte- und/oder Sicherungsorganen (11,111,211), dadurch **gekennzeichnet**, daß eine der Tafeln (3,5,103,105) auf ihrer der anderen Tafel zugewandten Seite bei ihrer ganzen, von dieser anderen Tafel überdeckten Fläche (3b,5a,103a,105b) mit dieser anderen Tafel und/oder mit den Halte- und/oder Sicherungsorganen (11,111,211) verklebt ist und daß die letzteren einen flexiblen Lappen (13,113,213) aufweisen.

2. Platte nach Anspruch 1, dadurch **gekennzeichnet**, daß der Lappen (13,113,213) mindestens zum Teil aus einem Gewebe und/oder Geflecht und/oder Gewirke gebildet ist.

3. Platte nach Anspruch 2, dadurch **gekennzeichnet**, daß das Gewebe und/oder Geflecht und/oder Gewirke aus mindestens einer Faser aus metallischem Material, beispielsweise Stahl, und/oder Glas und/oder Kunststoff gebildet ist.

4. Platte mit Halte- und/oder Sicherungsorganen nach einem der Ansprüche 1 bis 3, dadurch **gekennzeichnet**, daß der Lappen eine kompakte Folie aufweist.

5. Platte mit Halte- und/oder Sicherungsorganen nach Anspruch 4, dadurch **gekennzeichnet**, daß die Folie aus einem metallischen Material und/oder Kunststoff besteht.

6. Platte nach einem der Ansprüche 1 bis 5, dadurch **gekennzeichnet**, daß mindestens der zwischen einem ersten, zwischen die beiden Tafeln (3,5,103,105) hineinragenden Randabschnitt (13a, 113a) und einem zum Befestigen an einer Tragkonstruktion (21,121) bestimmten, zweiten Randabschnitt (13c,113c,213c) vorhandene mittlere Abschnitt (13b,113b,213b) jedes Halte- und/oder Sicherungsorgans (11,111,211) aus dem Lappen (13,113,213) gebildet und flexibel ist, wobei vorzugsweise auch der erste Randabschnitt (13a,113a) sowie beispielsweise das ganze Halte- und/oder Sicherungsorgan (11,111,211) aus dem Lappen (13,113,213) gebildet ist.

7. Platte nach einem der Ansprüche 1 bis 6, dadurch **gekennzeichnet**, daß die Platte (1,101,201) entlang von ihren Rändern (9) an einer Tragkonstruktion (21,121) angeklebt ist und die Halte- und/oder Sicherungsorgane (11,111,211) an der Tragkonstruktion (21,121) befestigt sind.

8. Platte nach Anspruch 7, dadurch **gekennzeichnet**, daß die Platte (1,101) durch gummielastische Klebverbindungen (25,125) an entlang ihren Rändern (9) verlaufenden, formfesten Haltestäben (23,123,223) der Tragkonstruktion (21,121) angeklebt ist und die Halte- und/oder Sicherungsorgane (11,111,211) an den Haltestäben (23,123,223) befestigt sind, wobei zur Befestigung zum Beispiel für jedes Halte- und/oder Sicherungsorgan (11) mindestens eine Schraube (31) oder ein das Halte- und/oder Sicherungsorgan (111,211) in einer Nut (123b, 223b) des Haltestabes (123,223) haltendes Verankerungselement (131,231) vorhanden ist.

9. Platte nach Anspruch 7 oder 8, dadurch **gekennzeichnet**, daß jedes Halte- und/oder Sicherungsorgan (11,111,211) zwischen seinem ersten, zwischen zwei Tafeln (3,5,103,105) befestigten Randabschnitt (13a,113a) und einem zweiten, an der Tragkonstruktion (21,121) befestigten Randabschnitt (13c,113c,213c) einen mittleren, vom flexiblen Lappen (13,113,213) gebildeten, zumindest im wesentlichen spannungslosen Abschnitt (13b,113b,213b) aufweist.

10. Platte nach einem der Ansprüche 7 bis 9, dadurch **gekennzeichnet**, daß die Platte (101) zusätzlich zu den zwei Tafeln (103,105) noch mindestens eine auf deren dem Gebäude-Innenraum zugewandten Seite angeordnete Tafel (115) aufweist, die bei den Plattenrändern (109) durch Randverbindungen mit den beiden erstgenannten Tafeln (103,105) verbunden und in ihrem mittleren Bereich von diesen durch einen freien Zwischenraum getrennt ist.

EP 0 320 674 A2

# FIG. 1

# FIG. 2

Metallbau Koller AG
860-39  gl

# FIG. 3

# FIG. 4

Metallbau Koller AG
860-39  gl